# FASCICULE DE BREVET EUROPEEN

(11) **EP 0 960 288 B1**
(45) Date de publication et mention de la délivrance du brevet: **17.07.2002**
(21) Numéro de dépôt: 98959961.8
(22) Date de dépôt: 11.12.1998
(51) Int. Cl.: F16D 25/08

(54) **RECEPTEUR HYDRAULIQUE POUR COMMANDE D'EMBRAYAGE, NOTAMMENT POUR VEHICULE AUTOMOBILE**
NEHMERZYLINDER FÜR DIE BETÄTIGUNG EINER KRAFTFAHRZEUGKUPPLUNG
CLUTCH CONTROL HYDRAULIC ACTUATOR, IN PARTICULAR FOR MOTOR VEHICLE

(30) Priorité: 11.12.1997 FR 9715834
(43) Date de publication de la demande: 01.12.1999
(73) Titulaire: VALEO, 75017 Paris (FR)
(72) Inventeur: TOBIASZ, André, F-93800 Epinay-sur-Seine (FR); REY, Frédéric, F-75011 Paris (FR); THOMIRE, Sylvain, F-92300 Levallois (FR)
(74) Mandataire: Gamonal, Didier
(86) Numéro de dépôt international: FR9802698
(87) Numéro de publication internationale: WO9930057

(56) Documents cités:
- WO-A-90/02274
- DE-A- 4 338 263
- DE-A- 4 412 927
- DE-A- 4 412 928
- DE-A- 4 427 942
- DE-A- 19 518 833
- DE-A- 19 523 011
- DE-A- 19 524 312
- DE-C- 4 303 303
- DE-U- 29 609 288
- GB-A- 2 256 907
- GB-A- 2 287 295

## Description

La présente invention concerne les récepteurs hydrauliques, pour commande d'embrayage, notamment de véhicule automobile, comportant une partie fixe comprenant un tube-guide interne et un corps extérieur concentrique définissant une cavité annulaire borgne propre a être alimentée en fluide et à l'intérieur de laquelle est monté mobile axialement un piston portant un élément d'attaque propre à agir sur le dispositif débrayeur d'un embrayage.

Un tel récepteur, appelé également cylindre hydraulique récepteur, est décrit dans le document EP-B-0 168 932.

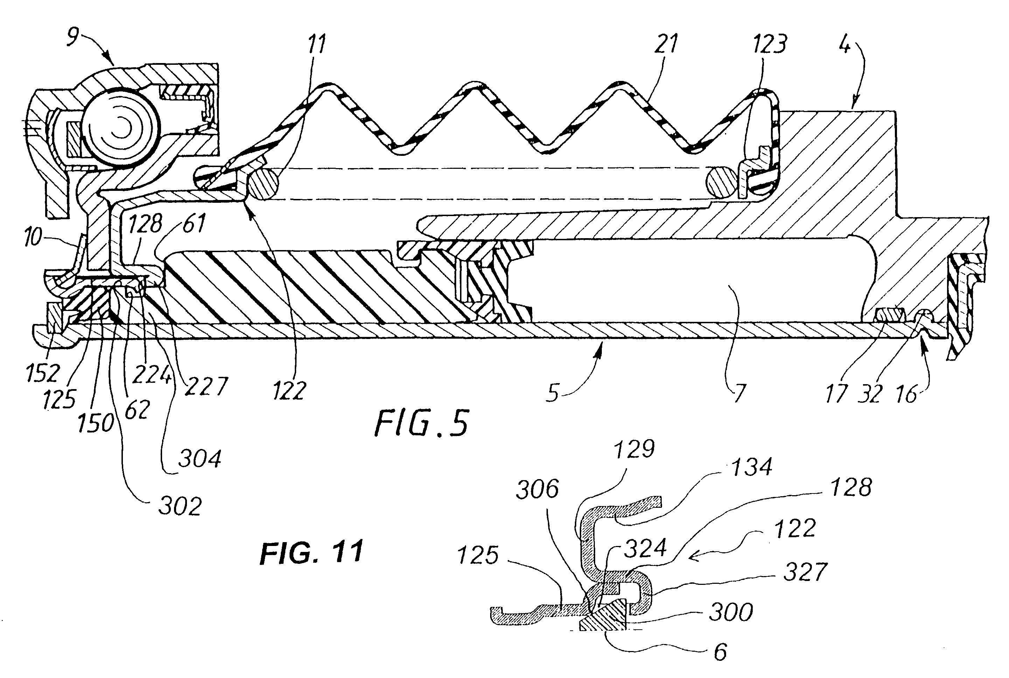

Le document DE-A-4.313.346, qui est considéré comme l'état de la technique le plus proche, décrit et représente (aux figures 5 à 8) un récepteur hydraulique pour commande d'embrayage doté d'un dispositif de débrayeur comportant une partie fixe comprenant d'une part, un tube-guide interne doté d'un axe symétrique axial et d'autre part, un corps externe concentrique, globalement de forme annulaire et qui comporte centralement une portion avant d'extrémité tubulaire externe entourant le tube-guide. Le tube et le guide définissent entre eux une cavité annulaire borgne propre à être alimentée en fluide et à l'intérieur de laquelle est monté mobile axialement un piston en matière synthétique qui porte, à son extrémité axiale avant, un élément d'attaque propre à agir sur le dispositif débrayeur de l'embrayage, du type dans lequel le tube-guide interne fait saillie axialement vers l'avant par rapport à la portion tubulaire externe et sert de guide au piston qui entoure le tube-guide en étant entouré par la portion tubulaire, et du type dans lequel le piston porte à son extrémité avant une pièce métallique porteuse et d'appui qui comporte au moins un tronçon annulaire d'orientation axiale dirigé vers l'arrière en direction de la portion tubulaire externe et prolongé, à son extrémité avant, radialement vers l'extérieur par un tronçon annulaire transversal d'appui pour un composant de l'élément d'attaque, la périphérie externe de cedit tronçon étant en coïncidence axiale avec la périphérie externe du piston.

Ce document ne propose aucune solution fiable pour l'ancrage axial de la pièce porteuse et d'appui sur la partie d'extrémité axiale avant du piston.

Afin de remédier à cet inconvénient, l'invention propose un récepteur caractérisé en ce qu'il est prévu des moyens d'ancrage, par coopération de formes, de la pièce porteuse et d'appui sur l'extrémité avant du piston. Grâce à l'invention, le piston peut être en matière moulable du type synthétique ou à base d'aluminium ou de magnésium et l'encrage est fiable.

Selon d'autres caractéristiques de l'invention :
- la pièce porteuse et d'appui comporte un premier tronçon annulaire d'orientation axiale qui est décalé radialement vers l'intérieur et dont l'extrémité axiale arrière se raccorde à l'extrémité axiale arrière du deuxième tronçon par un tronçon arrondi sensiblement en demi-cercle, et lesdits moyens d'ancrage sont formés au moins en partie dans ledit premier tronçon pour obtention d'un encrage encore plus robuste;
- la pièce porteuse et d'appui comporte au moins un trou à travers lequel s'étend une portion du matériau du piston ;
- des trous sont formés dans ledit premier tronçon annulaire d'orientation axiale ;
- des trous sont formés dans ledit tronçon arrondi de raccordement ;
- la pièce porteuse et d'appui présente des trous pour son ancrage ferme dans le piston par la technique du surmoulage ;
- la pièce porteuse et d'appui peut être ancrée par encliquetage dans le piston ;
- le piston présente un changement de diamètre à la périphérie externe de son extrémité avant avec formation d'un épaulement transversal entre les changements de diamètre, le tronçon arrondi prend appui sur l'épaulement et le premier tronçon comporte des pattes inclinées engagées chacune radialement vers l'intérieur dans une gorge formée dans la périphérie de la portion de diamètre réduit de l'extrémité avant du piston ;
- le piston présente un changement de diamètre à la périphérie externe de son extrémité avant avec formation d'un épaulement transversal entre les changements de diamètre, le tronçon arrondi prend appui sur l'épaulement et le premier tronçon comporte des trous dont chacun reçoit un ergot d'ancrage qui s'étend radialement vers l'extérieur depuis la périphérie de la portion de diamètre réduit de l'extrémité avant du piston ;
- l'extrémité axiale avant du premier tronçon annulaire forme une gorge de réception d'une rondelle élastique autocentreuse à action axiale qui s'engage à sa périphérie interne dans la gorge du premier tronçon et qui s'appuie à sa périphérie externe sur ledit un composant de l'élément d'attaque pour le solliciter en direction du tronçon annulaire transversal d'appui ;
- le premier tronçon annulaire s'étend axialement vers l'avant au delà de l'extrémité axiale avant du piston d'une longueur telle que cela permet de loger un joint racleur d'étanchéité, à l'avant du piston, qui comporte une lèvre en contact avec la périphérie externe du tube-guide interne ;
- le joint racleur s'appuie sur la face avant du piston et est centré par la périphérie interne du premier tronçon ;
- la gorge qui reçoit la rondelle est réalisée par refoulement de matière conduisant à la formation d'un bourrelet interne permettant d'immobiliser axialement le joint racleur entre le bourrelet et la face avant du piston ;
- la pièce porteuse et d'appui comporte un troisième tronçon annulaire axial qui est décalé radialement vers l'extérieur par rapport au deuxième tronçon afin que la portion avant d'extrémité tubulaire externe puisse pénétrer radialement entre les deuxième et troisième tronçons ;
- les deuxième et troisième tronçons annulaires sont reliés entre eux par ledit tronçon annulaire transversal d'appui ;
- le troisième tronçon annulaire d'orientation axiale se terminant par un épaulement transversal prolongé par un tronçon incliné d'extrémité pour le centrage et l'appui de l'extrémité axiale avant d'un ressort de précharge ;
- la face avant de l'épaulement transversal et du tronçon incliné sert d'appui à l'extrémité avant d'un soufflet d'étanchéité;
- l'élément d'attaque est un roulement à billes ;
- le roulement à billes comporte une bague interne qui présente à sa périphérie interne un rebord d'orientation transversale dirigé vers l'axe de symétrie axiale du tube-guide interne et qui constitue ledit composant de l'élément d'attaque ;
- le soufflet se termine à l'avant par un bourrelet d'accrochage centré intérieurement par la périphérie externe du troisième tronçon et qui prend appui sur une face de l'épaulement, le bourrelet pénètre sous la bague interne du roulement, d'orientation axiale à cet endroit.

D'autres avantages apparaîtront à la lumière de la description qui va suivre, en regard des dessins annexés dans lesquels :
- la figure 1 est une vue en perspective du récepteur selon l'invention ;
- la figure 2 est une vue en coupe axiale du récepteur de la figure 1 ;
- la figure 3 est une demi-vue partielle en coupe axiale montrant le récepteur en position embrayage engagé ;
- la figure 4 est une demi-vue partielle à grande échelle montrant le piston de la figure 2.
- la figure 5 est une vue analogue à la figure 4 pour un autre exemple de réalisation ;
- la figure 6 est une vue partielle en coupe axiale montrant le joint d'étanchéité du piston ;
- la figure 7 est une vue analogue à la figure 6 pour un autre exemple de réalisation ;
- la figure 8 est une vue partielle en coupe axiale du récepteur montrant l'arrière de celui-ci ainsi qu'un autre moyen d'assemblage du tube-guide au corps externe du récepteur concentrique ;
- la figure 9 est une vue analogue à la figure 8 pour un autre exemple de réalisation ;
- la figure 10 est une vue en coupe selon la ligne 10 de la figure 9 ; et
- la figure 11 est une demi-vue en section axiale qui illustre une variante de réalisation de la pièce de support et d'appui avec ses moyens d'ancrage par encliquetage sur le piston.

Dans les figures est représenté le récepteur 1 concentrique d'une commande hydraulique d'embrayage comprenant, de manière connue, un émetteur, dont la sortie est reliée via une canalisation 2 à une entrée d'alimentation 3 du récepteur 1 doté d'une chambre à volume variable.

L'émetteur est activé de différentes manières et comporte un piston mobile à l'intérieur d'un corps fixe.

S'agissant ici d'une application pour véhicule automobile, l'émetteur peut être activé par le conducteur via la pédale de débrayage, et le récepteur agit sur le dispositif débrayeur de l'embrayage comportant le plus souvent un diaphragme.

En variante, l'émetteur peut être activé de manière assistée, par exemple, à l'aide d'un moteur électrique, dont l'une des bornes d'alimentation est reliée à un calculateur commandant la mise en route du moteur selon des programmes déterminés ; l'arbre de sortie dudit moteur formant l'élément d'entrée d'une transmission mécanique à moyens élastiques d'assistance, ladite transmission comprenant un élément de sortie par exemple sous forme d'un poussoir agissant sur le piston de l'émetteur. Dans tous les cas le piston définit avec le corps fixe de l'émetteur une chambre à volume variable. Lorsque l'émetteur est activé son piston est déplacé axialement en sorte que la chambre à volume variable est pressurisée, ainsi que la chambre à volume variable du récepteur 1, qui augmente de volume tandis que celle de l'émetteur diminue de volume.

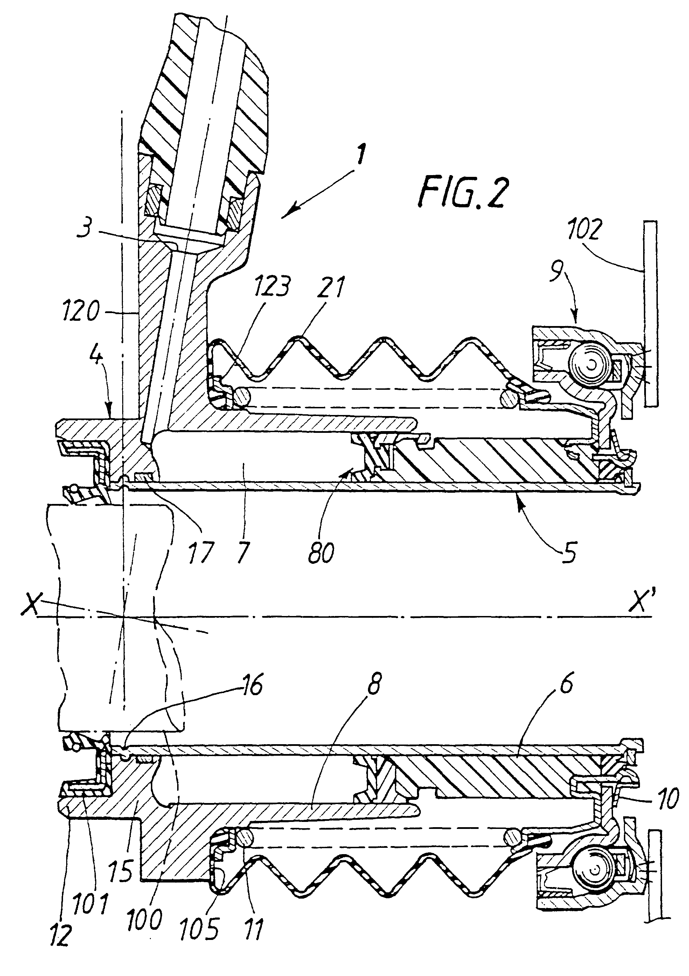

Lorsque l'émetteur est désactivé les chambres de l'émetteur et du récepteur sont dépressurisées, la chambre du récepteur diminuant de volume tandis que celle de l'émetteur augmente de volume. Il y a donc lors de ces opérations transfert de fluide de commande d'une chambre à l'autre. On notera que le diaphragme de l'embrayage - dont on a représenté seulement les extrémités de doigts en 102 à la figure 2 - exerce une action de rappel du piston du récepteur lorsque l'embrayage est réengagé ; la chambre du récepteur reprenant son volume initial.

Le fluide de commande peut être de nature gazeuse. Il peut s'agir par exemple d'air comprimé. Ici le fluide de commande est de nature hydraulique et consiste en de l'huile.

Par simplicité la commande sera appelée commande hydraulique, quelle que soit la nature du fluide.

Ainsi qu'on le sait la chambre de commande du récepteur 1 est délimitée par une partie fixe 4 et 5 et par une partie mobile 6 en relation de cylindre-piston.

La partie fixe 4,5 délimite une cavité 7 borgne de forme annulaire, dans laquelle débouche l'entrée d'alimentation 3.

La partie mobile est un piston 6 de forme annulaire mobile axialement à l'intérieur de la cavité 7 pour définir avec celle-ci la chambre à volume variable précitée.

La cavité 7, ainsi que ladite chambre, est donc admise à être pressurisée et dépressurisée à partir de l'entrée 3 via la canalisation 2.

Ici la partie fixe 4,5 et la partie mobile 6 - le piston 6 - sont coaxiales en étant agencées de manière concentrique. Le récepteur 1 est donc du type concentrique ; la cavité 7 étant borgne, d'orientation axiale et annulaire.

Plus précisément la partie fixe 4,5 est ici en deux pièces 4,5 concentriques.

L'une des pièces, dite pièce externe 4, globalement de forme annulaire, dénommée ici après corps externe 4, comporte centralement une portion avant d'extrémité tubulaire 8 entourant l'autre pièce 5 en forme de tube-guide 5. Ce tube 5 interne est métallique. Il est de faible épaisseur pour réduction de l'encombrement radial et a un axe de symétrie axiale X-X'.

L'épaisseur du tube 5 est inférieure à l'épaisseur de la portion tubulaire 8, de longueur axiale inférieure à celle du tube 5.

Le tube 5 fait saillie axialement par rapport à la portion tubulaire 8 et sert de guide au piston 6, qui entoure ainsi le tube 5 en étant entouré par la portion tubulaire 8.

Le piston 6 porte à son extrémité arrière un joint 80 dynamique à lèvres. Ce joint pénètre à l'intérieur de la cavité 7 et rend celle-ci étanche. L'extrémité avant du piston 6 agit sur une butée de débrayage 9, qui consiste ici en un roulement à billes comportant une bague tournante, formant élément d'attaque, propre à agir sur le diaphragme de l'embrayage et une bague non tournante en relation avec le piston 6. Ce piston 6 agit par son extrémité avant sur la bague non tournante, séparée de la bague tournante par des billes.

Ici les bagues du roulement 9 sont concentriques et coaxiales. Ce roulement de butée est porté par le piston 6 coulissant axialement le long du tube 5 métallique.

Le roulement 9 peut être fixe radialement en étant par exemple emmanché à force par sa bague non tournante sur le piston 6.

Ici le roulement peut se déplacer radialement par rapport au piston 6 et au diaphragme de l'embrayage pour diminuer les usures sachant que l'axe de symétrie axiale du diaphragme n'est pas confondu avec celui du récepteur 1.

Le centrage du roulement 9 par rapport au diaphragme peut ne pas être maintenu. Par exemple un élément en matière élastique, tel que de l'élastomère, peut être interposé radialement entre le piston 6 et la bague non tournante du roulement 9. Cet élément attelle également le roulement au piston.

Ici un jeu radial existe entre l'extrémité avant du piston 6 et le roulement 9 et une rondelle élastique à action axiale 10 attelle le roulement au piston 6 de manière décrite ci-après. Le roulement 9 peut cheminer radialement par rapport au piston jusqu'à trouver sa position de centrage par rapport au diaphragme. Ce centrage est par la suite maintenu par la rondelle élastique 10. La butée de débrayage 9 est ainsi à auto-centrage maintenu.

La bague tournante, ici la bague externe, est profilée pour contact local avec le diaphragme, plus précisément pour contact local avec l'extrémité interne des doigts 102 de celui-ci.

Ainsi lorsque l'extrémité interne des doigts du diaphragme, centralement ouverte, est de forme bombée, la face avant de la bague tournante, destinée à coopérer avec ladite extrémité, est de forme globalement plane.

Lorsque l'extrémité interne doigts du diaphragme est plane, la face externe de la bague tournante est alors bombée comme visible à la figure 2.

Ici la butée 9 est propre à agir en poussée sur l'extrémité interne des doigts du diaphragme, dont la partie périphérique, en forme de rondelle Belleville, agit sur le plateau de pression de l'embrayage, soit directement ou indirectement par l'intermédiaire d'une rondelle Belleville montée en série avec le diaphragme, pour normalement solliciter ledit plateau en direction du volant moteur du véhicule, formant plateau de réaction, afin de serrer les garnitures de friction de la friction d'embrayage entre lesdits plateaux de réaction et de pression solidaires en rotation du vilebrequin du moteur du véhicule.

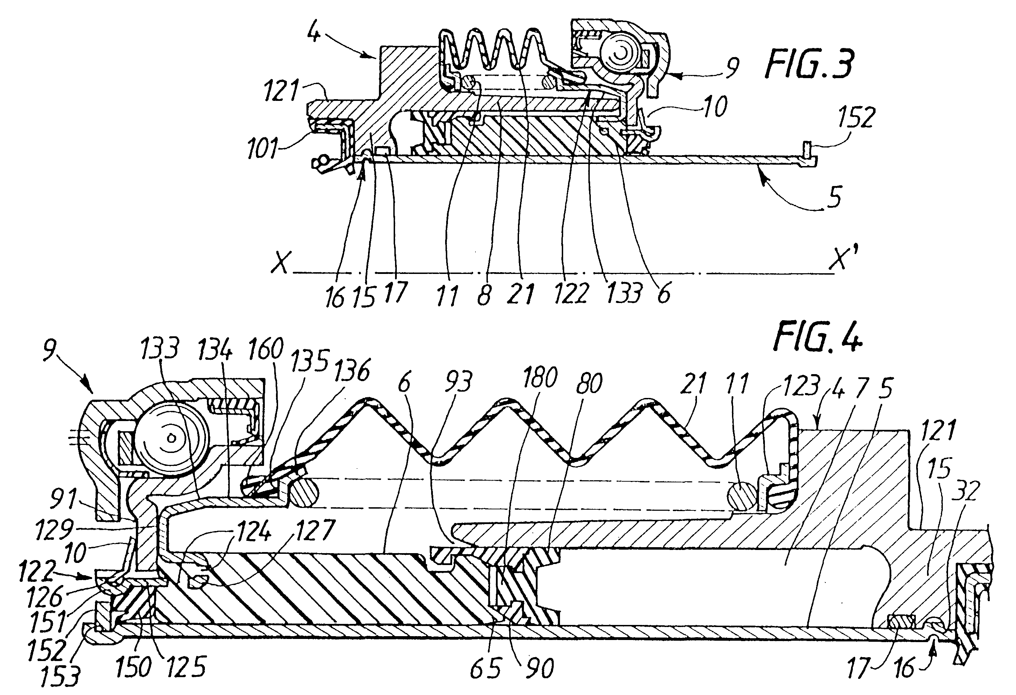

Cette friction, appelée également disque de friction, comporte centralement un moyeu accouplé de manière rigide ou élastique à un disque portant les garnitures de friction. Le moyeu est cannelé intérieurement pour sa liaison en rotation à un arbre mené ici l'arbre d'entrée 100 de la boîte de vitesses représenté partiellement à la figure 2. Cet arbre 100 traverse le tube-guide 5 en étant entouré par celui-ci. L'embrayage est donc normalement engagé (figure 3), le volume de la chambre variable du récepteur 1 étant alors minimum avec une pression résiduelle dans la cavité 7. Un ressort de rappel 11, dit ressort de précharge, est interposé axialement entre la portion 8 et le roulement à billes 9 afin de maintenir, de manière connue, la bague tournante du roulement 9 en contact permanent avec le diaphragme pour diminuer les usures. Le couple de l'arbre moteur est donc transmis à l'arbre d'entrée de la boîte de vitesses.

Pour désengager l'embrayage (figure 2) on pressurise de manière précitée la cavité 7 du récepteur ce qui provoque une augmentation de volume de la chambre de celui-ci et un déplacement du piston 6 et de la butée 9 vers la droite de la figure 2.

Le diaphragme, monté de manière pivotante sur un couvercle solidaire du volant moteur, bascule jusqu'à ce que son action sur le plateau de pression s'annule. L'embrayage est alors désengagé car les garnitures de friction de la friction d'embrayage sont alors libérées.

Le couple moteur n'est alors plus transmis à l'arbre d'entrée de la boîte de vitesses présentant un carter.

Bien entendu l'embrayage peut être équipé d'un dispositif pour compenser l'usure des garnitures de friction.

Lorsque l'on dépressurise la cavité 7, le diaphragme déplace la butée de débrayage et le piston vers la gauche de la figure 2. Le volume de la chambre du récepteur 1 est alors minimal et le piston 6 reprend sa position initiale (figure 3).

La partie fixe 4,5 est destinée à être fixée ici sur la paroi avant du carter fixe de la boîte de vitesses. La paroi est traversée par l'arbre d'entrée 100 de la boîte de vitesses, représenté partiellement en pointillés à la figure 2, avec intervention d'un joint 101, dit joint tournant, en contact avec l'arbre d'entrée. Cette paroi est donc dotée d'une ouverture pour la traversée de l'arbre d'entrée.

Ici c'est la pièce externe 4 de la partie fixe 4,5 qui est fixée sur le carter de la boîte de vitesses, au niveau de ladite ouverture.

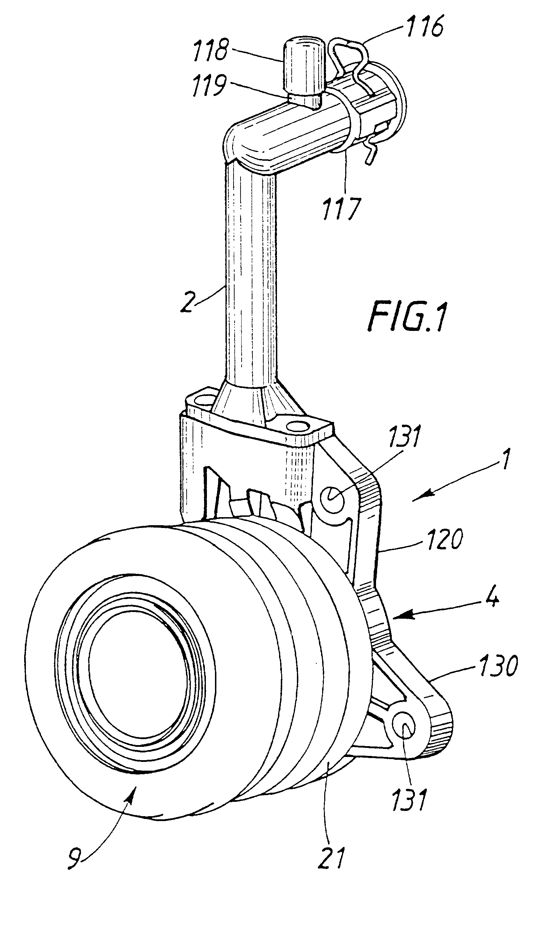

Plus précisément cette pièce 4 forme un corps extérieur globalement de forme annulaire entourant le tube-guide interne 5. Le corps 4 présente deux oreilles 130, dont une seule est visible à la figure 1, pour sa fixation sur la paroi du carter de la boîte de vitesses, usuellement à l'aide de vis traversant chacune une ouverture 131 que présente chaque oreille. Il est prévu également un troisième point de fixation dont on voit en 131 le trou de passage.

L'arrière du corps 4 est globalement en forme de plaque 120 dont est issue par moulage la portion avant tubulaire 8. Le corps 4, en matière moulable est par exemple à base d'aluminium.

Les oreilles 130 appartiennent à la plaque 120 et s'étendant en majeure partie radialement vers l'extérieur.

Compte tenu de la robustesse du corps 4, on en profite pour prolonger celui-ci, à l'arrière de la paroi 8 et de la plaque 120, par un rebord transversal 15, dirigé radialement vers l'intérieur, constituant le fond de la cavité borgne 7. Ce rebord 15 dénommé rebord interne appartient à un tronçon tubulaire arrière 121 s'étendant à l'arrière de la plaque 120. Le rebord 15, dirigé radialement vers l'axe X-X', est plus épais que le tube 5.

Le rebord 15 permet de limiter la déformation de la cavité 7 sous l'effet des variations de pression dont elle est l'objet lors des opérations de débrayage et de réembrayage de l'embrayage. Le déplacement du piston 6 est ainsi plus précis et plus fidèle.

En outre on ménage le tube 5 et plus précisément les moyens d'assemblage 16 de celui-ci au corps 4, ainsi que le joint d'étanchéité 17 statique de la cavité 7. Ce joint 17 est ici de forme torique en étant axialement de forme oblongue pour un bon contact avec le tube 5 et une bonne étanchéité.

Ici les moyens d'assemblage 16 consistent en une fixation par sertissage.

Plus précisément le tronçon arrière 121 est entaillé pour logement du joint 101 et délimiter le rebord 15. Une gorge d'assemblage 32 est réalisée à l'arrière du rebord 15 et l'on fait fluer le métal du tube 5 à l'intérieur de la gorge 32, ici de section semi-circulaire favorable à une bonne fixation. L'épaisseur du tube 5 rend cela possible. On notera que le joint 101 s'appuie sur la face du rebord 15 tournée à l'opposé de la cavité 7. Grâce à ce mode d'assemblage, en combinaison avec le rebord 15, le tube est de forme simple et ne comporte pas à l'arrière une collerette transversale pour sa fixation par sertissage au corps 4.

Le tube 5 subit de très faibles déformations sous l'effet des variations de pression dans la cavité 7. Le piston 6 se déplace dans de bonnes conditions

Ces moyens de sertissage 16 sont décalés axialement vers l'avant par rapport au joint d'étanchéité 17 intervenant entre la périphérie interne du rebord 15, dirigé radialement vers l'intérieur, et la périphérie externe du tube-guide 5. Ici, le joint 17 est porté par le rebord interne 15, en étant monté dans une gorge d'étanchéité évasée, non référencée, que celui-ci présente à sa périphérie interne. La gorge d'étanchéité est évasée radialement vers l'intérieur en direction de l'axe X-X' et axialement est plus large que la gorge d'assemblage 32. Ce rebord 15 est de faible hauteur et appartient à la partie arrière du corps 4, dont la plaque 120 est percée pour former l'entrée d'alimentation 3 débouchant dans le fond de la cavité 7. La canalisation 2 est rapportée par vissage de son embase sur le bord supérieur de la plaque 120, dans le prolongement de l'entrée 3. Les moyens de sertissage 16 - fluage local du tube 5 dans le gorge 32 - sont implantés axialement entre les joints 17 et 101.

Le ressort de précharge 11 entoure la portion tubulaire 8 en étant centré par celle-ci. Un épaulement 105 est formé à la jonction de la portion tubulaire 8 avec la plaque 120 propre à être traversée par l'arbre 100.

On notera que le corps 4 ne présente pas de canal de purge, celle-ci étant réalisée à la périphérie externe de la canalisation 2 en 119.

Plus précisément la canalisation 2 s'étend à l'extérieur du carter de la boîte de vitesses et traverse ledit carter. Cette canalisation présente à l'extérieur dudit carter une protubérance tubulaire 119 servant à effectuer la purge. Cette protubérance est normalement recouverte par un capuchon de protection 118. La canalisation présente une extrémité externe 117 conformée en connecteur femelle brochable avec une épingle 116 engagée dans des fentes de l'extrémité 117 pour recevoir le connecteur mâle d'une conduite venant de l'émetteur.

La canalisation 2 a une forme d'équerre avec une partie verticale se fixant sur la plaque 120 et une partie globalement horizontale s'étendant à l'extérieur du carter de la boîte de vitesses et portant la purge 119 et le raccord d'extrémité. Ici, la canalisation 2 présente une embase avec latéralement deux trous pour passage de vis permettant de fixer l'embase sur la tranche externe de la plaque 120 (figure 1). Bien entendu la canalisation 2 peut être rapportée par brochage ou vissage sur le corps 4. L'épaulement 105 sert d'appui à un bourrelet d'extrémité que présente un soufflet de protection 21 entourant le ressort 11, en forme de ressort à boudin. Le ressort 11 s'appuie à l'une de ses extrémités sur ledit bourrelet par l'intermédiaire d'une pièce d'appui métallique 123 interposée entre le ressort et le bourrelet. La pièce 123 présente deux parties transversales raccordées l'une à l'autre par une partie globalement horizontale. L'une des parties transversales est en contact avec le bourrelet d'extrémité radialement au-dessus de l'autre partie transversale en contact avec le ressort 11 centré par une surépaisseur, que présente l'extrémité arrière de la portion tubulaire avant 8.

L'autre extrémité du soufflet 21 est accrochée sur une pièce métallique d'appui et de support 122, dite pièce porteuse 122, de forme générale annulaire.

La pièce porteuse 122 est ici en tôle et porte la rondelle élastique 10, appelée usuellement rondelle d'auto-centrage, le roulement 9 et le bourrelet d'extrémité avant du soufflet 21.

Dans les figures 1 à 4 la pièce 122 est noyée (ancrée) en partie dans le piston 6 en matière synthétique, ici en matière plastique renforcée par des fibres. Le piston 6 peut être par exemple à base de « Delrin » ou peut être en tout autre matière présentant des bonnes qualités de coulissement. Ainsi selon l'invention il est prévu grâce aux trous 124 des moyens d'encrage robustes et fiables de la pièce 122 sur l'extrémité avant du piston 6 et ce par coopération de formes.

A l'avant du piston 6, il est prévu un joint racleur 150, décrit ci-après, pour, de manière connue, éviter de polluer les garnitures de friction du disque de friction.

La pièce 122 présente pour se faire, comme mieux visible à la figure 4, des trous 124 pour son ancrage ferme dans le piston 6 par la technique du surmoulage. La pièce 122 est donc fixée par surmoulage au piston 6 en matière synthétique. En variante, le piston 6 est en matière moulable à base d'aluminium ou de magnésium.

Plus précisément, la pièce porteuse 122 présente, à sa périphérie interne, un premier tronçon annulaire d'orientation axiale 125, emboutie à son extrémité libre avant pour formation d'une gorge 126 de réception de la rondelle 10. L'autre extrémité du tronçon 125 se raccorde à un tronçon arrondi en demi-cercle 127 prolongé par un second tronçon 128 annulaire d'orientation axiale parallèle au premier tronçon 125.

Le deuxième tronçon 128 est prolongé radialement vers l'extérieur, à son extrémité arrière, par un tronçon annulaire d'appui transversal 129, lui-même prolongé par un tronçon incliné de dégagement 133, prolongé par un troisième tronçon annulaire d'orientation axiale 134 se terminant par un épaulement transversal 135 prolongé par un tronçon incliné 136 d'extrémité. Sur le tronçon 136 est formé un ergot pour coopérer avec la dernière spire du ressort 11 et bloquer celui-ci en rotation.

La pièce annulaire 122 a ainsi une forme tortueuse et comporte trois tronçons annulaires d'orientation axiale 125, 128, 134 décalés radialement les uns par rapport aux autres, le troisième tronçon 134 étant plus long axialement que le premier tronçon 125, lui-même plus long axialement que le deuxième tronçon 128.

Le troisième tronçon 134 est dirigé axialement vers l'arrière en sens inverse par rapport au premier tronçon 125. Le tronçon transversal 129 sert d'appui à la bague intérieure du roulement 9 ici en tôle. La bague extérieure tournante du roulement 9 est ici en tôle, mais en variante, peut être massive. Plus précisément la bague interne du roulement présente à sa périphérie interne un rebord 91 d'orientation transversale dirigé vers l'axe de symétrie axiale X-X' du tube-guide 5. Le roulement 9 a en section globalement la forme d'un drapeau s'étendant à partir du rebord 91, axialement en direction du corps externe 4 comme les tronçons 128, 134, tandis que le premier tronçon 125 s'étend de part et d'autre du tronçon 129 et est dirigé axialement en sens inverse du corps 4. La bague interne du roulement 9 s'étend globalement radialement au-dessus du tronçon incliné 133 et du troisième tronçon 134. Ainsi qu'on l'aura compris le tronçon incliné 133 permet de réduire l'encombrement radial et évite toute interférence entre la bague interne du roulement 9 et le troisième tronçon 134.

Bien entendu le roulement 9 est étanche et présente axialement de part et d'autre de ses billes des moyens d'étanchéité.

La rondelle élastique d'auto-centrage 10, ici inclinée à section en forme de dièdre, s'engage à sa périphérie interne dans la gorge 126 du premier tronçon 125 et s'appuie à sa périphérie externe sur le rebord 91 en sorte que ledit rebord 91 est pincé élastiquement entre la rondelle 10 et le tronçon d'appui 129. Un jeu radial existe entre la périphérie interne du rebord 91 et le premier tronçon 125, sachant que la rondelle 10 sollicite axiaiement vers l'arrière le rebord 91 en direction du tronçon d'appui 129. Suivant une caractéristique, le tronçon 129 est décalé axialement vers l'arrière par rapport à la gorge 126 et l'ancrage de la pièce 122 dans le piston est réalisé à l'arrière du tronçon 129 pour un ancrage ferme d'un bon appui de la bague interne.

Les trous 124 sont réalisés dans le premier tronçon 125 et dans le tronçon arrondi 127. Le tronçon 127 est noyé dans le piston 6 et il en est de même en partie du premier tronçon 125. Le deuxième tronçon 128 est noyé dans le piston en majeure partie, à l'exception de sa périphérie externe.

Plus précisément, la périphérie externe du deuxième tronçon 128 est en coïncidence axiale avec la périphérie externe du piston 6 en contact direct avec la périphérie externe du tube-guide 5. Ainsi la pièce porteuse 122 est bien ancrée dans le piston 6.

La longueur du premier tronçon 125 dépend des applications. Ici ce premier tronçon 125 fait saillie axialement par rapport à l'extrémité avant du piston 6, d'une longueur telle que cela permet de loger le joint racleur d'étanchéité 150 à l'avant du piston. Le joint 150 comporte une lèvre en contact avec la périphérie externe du tube-guide 5. Ce joint s'appuie sur la face avant du piston 6 et est en contact intime, c'est-à-dire centré, par la périphérie interne du premier tronçon 125. La gorge 126 est réalisée par refoulement de matière conduisant à la formation d'un bourrelet interne 151 permettant d'immobiliser axialement le joint 150 entre ledit bourrelet et la face avant du piston 6. Ici l'extrémité avant du joint 150 est creusée pour épouser la forme du bourrelet 151. Ainsi qu'on l'aura compris le montage du joint 150 se fait par emmanchement à force et encliquetage. L'extrémité avant du joint 150 est destinée à prendre appui sur un circlips 152 engagé dans une gorge 153 réalisée par refoulement de matière du tube 5. Bien entendu ce contact a lieu lorsque le récepteur 1 n'est pas encore monté sur le véhicule. Cela empêche le piston 6 de s'échapper, sous l'action du ressort 11, du corps 4.

Le tube-guide 5 a donc une forme simple avec deux refoulements de matière dirigés radialement en sens inverse, le premier dirigé vers l'axe X-X' pour formation de la gorge 153, l'autre dirigé radialement vers la direction opposée à l'axe X-X' pour formation des moyens d'assemblage 16 et d'un refoulement de matière pénétrant dans la gorge d'assemblage 32. Bien entendu, la lèvre d'étanchéité du joint 150 est en retrait axial par rapport à l'extrémité avant du joint 150 pour ne pas venir en contact avec celui-ci.

Ainsi qu'on l'aura compris la distance radiale entre le deuxième tronçon 128 et le troisième tronçon 134 dépend de l'épaisseur de la portion avant 8 du corps 4, afin que ladite portion puisse pénétrer radialement entre les tronçons 128,134 comme visible à la figure 3. L'encombrement axial de la butée est ainsi réduit lorsque l'embrayage est engagé (figure 3).

Ici un jeu radial existe entre le tronçon incliné 133 de dégagement et la portion 8 lorsque l'embrayage est en position engagée (figure 3). L'épaulement 135 et le tronçon d'extrémité 136 ont une double fonction. La face dorsale des tronçons 135, 136 sert d'appui au ressort 11, tandis que la face avant des tronçons 135, 136 sert d'appui à l'extrémité avant du soufflet 21.

Le tronçon 136 évite de blesser le soufflet 21 se terminant à l'avant par un bourrelet d'accrochage 160 centré intérieurement par la périphérie externe du troisième tronçon 134. Le bourrelet 160 prend appui sur la face frontale de l'épaulement 135. Le bourrelet 160 pénètre sous la bague interne du roulement, d'orientation axiale à cet endroit. Le tronçon 136 permet de centrer le ressort 11 et d'éviter une rotation de celui-ci.

Ainsi, conformément à l'invention, la pièce porteuse 122 est une pièce multifonctions permettant de réduire le coût du piston 6 de forme tubulaire. Cette pièce 122 porte la rondelle 10, le joint 150, le roulement 9, et les extrémités avant respectivement du soufflet 21 et du ressort 11. La pièce 122 sert de face de frottement au rebord 91 et permet de réduire l'encombrement axial et radial du récepteur.

Le piston 6 peut être ainsi standardisé et présente une gorge annulaire 92 à sa périphérie externe au voisinage de son extrémité arrière. La gorge 92 présente un fond délimité par deux flancs transversaux. Le joint 80 dynamique est porté par une pièce 93 dotée de trous axiaux étagés 94. La face arrière de la pièce 93 est évidée centralement et est délimitée ainsi par une collerette axiale 95. Les trous 94 débouchent centralement dans la face arrière.

Ainsi le joint 80 est injecté à travers les trous 94, en sorte que le joint 80 est centré par la collerette 95 et présente des pions épaulés 180 engagés dans les trous 94, lesdits pions étant chacun immobilisé axialement par la collerette 96 formée à la faveur du changement de diamètre du trou 94 étagé en diamètre pour ce faire.

Le joint 80 est ainsi solidaire de la pièce 93, ici en matière synthétique telle que la matière plastique, et est centré par ladite pièce 93 pénétrant dans la cavité étanche 7. L'extrémité avant de la pièce 93 présente au moins un cran 97 engagé à jeu axial dans la gorge 92.

Le cran 97, dirigé radialement vers l'axe X-X', peut être continu ou fractionné en appartenant dans ce cas à des pattes élastiquement déformables radialement en direction apposée à l'axe X-X'. Le montage de la pièce 93, et donc du joint 80, sur le piston 6 se fait par encliquetage.

A l'arrière du ou des crans 97, la pièce 93 présente une portion tubulaire 98, prolongée par une portion à face interne sphérique 99. Le piston 6 à sa périphérie externe présente à son extrémité arrière une face cylindrique 68 prolongée par une face bombée 69. Le piston 6 est ainsi torique à l'arrière plus précisément la face bombée 69 est de rayon très inférieur à celui de la face interne sphérique 99 de la pièce 93 porteuse du joint 80.

Le rayon de la sphère de la face 99 à un centre situé sur l'axe X-X'. Un jeu radial existe entre la face cylindrique 68 et la périphérie interne de la portion 98, ce qui permet au piston de rotuler par contact de sa face 69 avec la face 99.

A sa périphérie interne le piston 6 présente une saillie axiale 65 à face externe inclinée de forme tronconique en contact avec une face interne inclinée 90 de forme tronconique qui présente la pièce à sa périphérie interne.

Ainsi, compte tenu que les extrémités des doigts 102 du diaphragme ne sont pas dans le même plan, par contact avec la butée 9, il se produira dans la position de la figure 3 - embrayage engagé - un mouvement de nutation du piston, qui ne se traduira pas par un mouvement de la pièce 93 et du joint 80, un jeu axial existant entre les crans 97 et les flancs de la gorge 92. Ce jeu autorise un mouvement du piston vis-à-vis de la pièce 93 ce qui permet de diminuer les usures du joint 80. Plus précisément les déplacements du piston 6 dans les conditions de la figure 3 sont infimes et la pièce 93 reste en place sous l'effet de la pression résiduelle régnant alors dans la cavité 7. Le piston 6 peut alors pivoter (rotuler) par contact de sa face 69 avec la face 99 de la pièce 93. Lorsque l'on pressurise (figure 2) la cavité 7 on obtient un contact entre les faces 65 et 90 et donc un bon mouvement du piston 6 sans risque de coincement.

Bien entendu, figure 5, les tronçons 128 et 125 de la pièce 122 peuvent être en contact l'un avec l'autre. La pièce porteuse 122 peut être ancrée par encliquetage dans le piston 6 présentant alors un changement de diamètre à la périphérie externe de son extrémité avant avec formation d'un épaulement transversal 61 entre les changements de diamètre.

Dans ce cas le tronçon arrondi 227 prend appui sur l'épaulement 61 et le premier tronçon 125 comporte des pattes inclinées 224 engagées chacune dans une gorge 62 de l'extrémité avant du piston 6. Comme à la figure 1, l'ancrage de la pièce porteuse sur l'extrémité avant du piston 6 est réalisé à l'arrière du tronçon d'appui de la pièce porteuse 122 par coopération de formes.

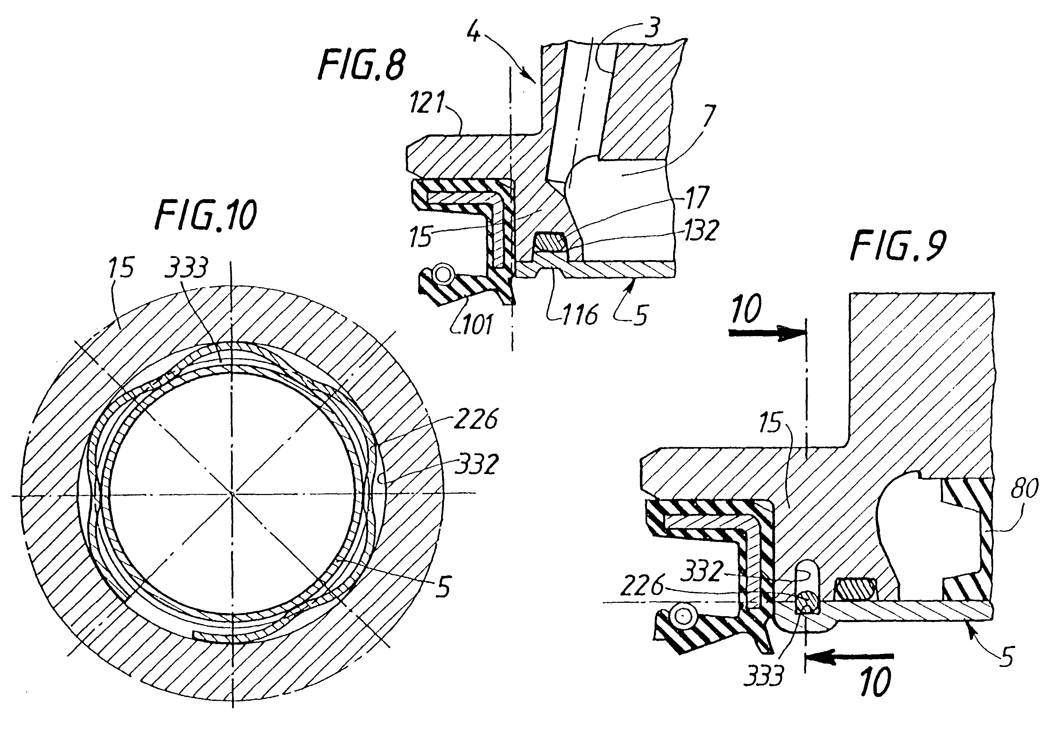

En variante les moyens d'assemblage 16 du tube 5 au corps 4 peuvent avoir une autre forme. Ainsi à la figure 8 le joint 17 est monté dans le fond d'une section gorge d'assemblage et d'étanchéité 132 de forme trapézoïdale. Le refoulement local de matière 116 du tube 5 est réalisé directement dans cette gorge 132.

Le joint 17 est comprimé entre le refoulement 116, dirigé à l'opposé de l'axe X-X' et le fond de la gorge 132. Dans ce cas on réduit les usinages du rebord 15.

En variante, les figures 9 et 10, le joint 17 est comme la figure 4 placé dans une gorge d'assemblage particulière 332 moins large axialement que la gorge d'étanchéité. L'assemblage est réalisé à l'aide d'un circlips 226 ondulé radialement et ouvert monté dans une gorge radiale 332 d'assemblage de forme oblongue ménagée dans le rebord 15 et dans une gorge 333 ménagée en correspondance dans l'extrémité arrière du tube 5. Cette gorge 333 conduit à refouler localement le tube 5 vers l'intérieur de manière analogue pour former la gorge 153. Ainsi l'assemblage du tube 5 avec le corps 5 se fait par encliquetage le circlips étant placé par avance dans la gorge 332. Ce circlips 226 est déformable élastiquement radialement vers l'intérieur pour se refermer puis se détendre et tomber dans la gorge 333 lors de l'assemblage du tube 5 avec le corps 4.

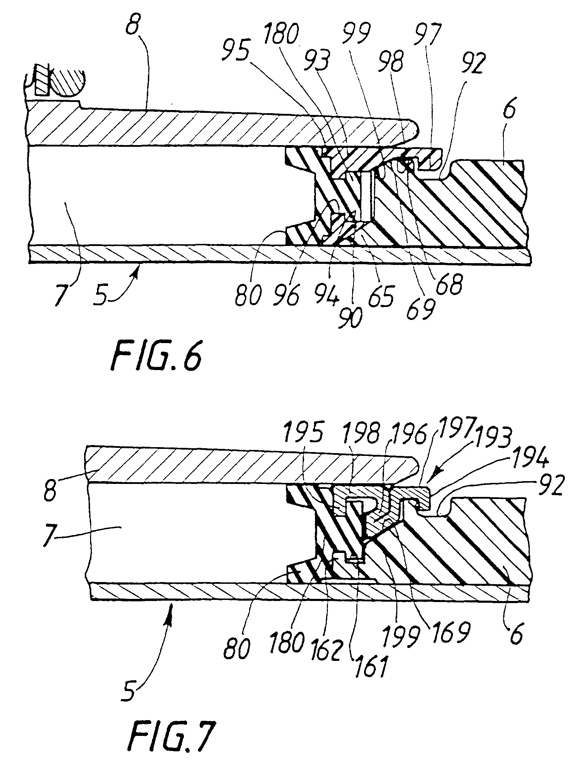

Le tube intérieur 5 a donc une forme symétrique. Bien entendu le joint 80, comporte une lèvre externe, pour contact avec la périphérie interne de la portion 8 du corps 4, et une lèvre interne pour contact avec la périphérie externe du tube 5. Ce joint peut être relié au piston par une pièce en tôle pliée 193 comme visible à la figure 7.

Dans ce cas, la tôle pliée 193 présente à son extrémité avant un rebord radial 194 pénétrant dans la gorge 92 du piston 6 et à son extrémité arrière un rebord radial 195 parallèle au rebord 194. Chacun des rebords 194,195, dirigés radialement vers l'intérieur et donc vers l'axe X-X', se raccorde à un tronçon annulaire d'orientation axiale respectivement 197,198. Chaque tronçon 197,198 se raccorde à un tronçon central 196 double, formé de deux tronçons accolés, se raccordant respectivement au tronçon 197 et au tronçon 198.

Le tronçon central 196 présente intérieurement une face interne sphérique 199 de rayon centrée sur l'axe X-X' et propre à coopérer avec une face externe bombée 169 du piston.

La face 169 a un rayon inférieur à celui de ia sphère comme à la figure 6.

La face 169 se raccorde à une gorge 161, formée à l'arrière du piston 6. Le joint dynamique 80 à lèvres, présente des pions épaulés 180 qui comportent une gorge dans laquelle s'engagent le rebord 195 et la collerette d'extrémité arrière 162 du piston délimitant la gorge 161.

La tête du pion 180 pénètre dans la gorge 161 et dans l'espace ménagé entre le rebord 195 et le tronçon central 196.

Bien entendu, le corps extérieur peut être monté de manière indirecte sur la structure fixe, via le carter de la boîte de vitesses, par l'intermédiaire d'une semelle d'adaptation comme décrit, par exemple, dans le document FR-A-2 745 616.

Dans ce cas, le corps externe est standard et c'est la semelle qui porte les oreilles de fixation des moyens d'assemblage du type baïonnette, intervenant entre la semelle et le corps externe. La butée de débrayage peut avoir, en inversant les structures, une bague intérieure tournante et une bague extérieure non tournante, dotée d'un rebord interne, destinée à porter, sous l'action de la rondelle élastique d'autocentrage, contre le tronçon transversal d'appui 129 de la pièce porteuse 122.

Ainsi qu'il ressort à l'évidence de la description des dessins, le rebord interne 15, obtenu avantageusement par moulage, est plus épais que le tube-guide 5. Les moyens d'assemblage 16 peuvent être des moyens de sertissage ou d'encliquetage et permettent de fixer le tube-guide 5 au rebord interne 15. Les gorges d'assemblage 32, 132, 332, du rebord interne, débouchent à la périphérie interne du rebord 15.

Le corps extérieur 4 peut être en matière synthétique moulable, telle que la matière plastique renforcée par des fibres.

Le circlips 152 forme une butée d'arrêt pour le piston 6. Cette butée peut avoir une autre forme. On peut supprimer le tronçon 133 et raccorder directement le troisième tronçon 134 au tronçon 129.

On notera que l'entrée du fluide de commande, ici de l'huile, dans la cavité 7 se fait dans de très bonnes conditions. En effet, l'entrée 3, en forme de canal, débouche au niveau de la partie supérieure de la face avant du rebord interne 15. Cette partie supérieure forme un dégagement (une entaille) de forme arrondie prolongée par une face inclinée.

L'alésage interne de la portion 8 est également entaillée à sa partie arrière au niveau de l'entrée 3. Cela permet d'effectuer un rodage et évite que la lèvre supérieure du joint 80 ne vienne en contact avec le rebord 15. Le dégagement de la face avant du rebord 15, délimitant la cavité 7, affecte donc également l'extrémité arrière de la périphérie interne de la portion avant 8.

Dans tous les cas, le rebord 15 présente une gorge à sa périphérie interne pour l'assemblage du tube-guide.

On décrira maintenant la variante de réalisation illustrée à la figure 11 qui comporte des moyens différents d'encliquetage axial de la pièce 122 sur la portion avant de diamètre réduit du piston 6.

Comme à la figure 5, le piston 6 présente un changement de diamètre à la périphérie externe de son extrémité avant avec formation d'un épaulement transversal 61 entre les changements de diamètre. Le tronçon arrondi 327 de raccordement entre les tronçons 128 et 125 prend appui axialement vers l'arrière sur l'épaulement 61. Le premier tronçon 125 comporte des trous 324 dont chacun est réalisé à la faveur d'un crevé, radialement vers l'extérieur, dans le premier tronçon 125. Chaque trou reçoit un ergot d'ancrage 300 qui s'étend radialement vers l'extérieur depuis la périphérie 302 de la portion de diamètre réduit 304 de l'extrémité avant du piston 6.

Pour faciliter l'encliquetage, chaque ergot d'ancrage 300 comporte une face avant inclinée 306 formant chanfrein d'encliquetage.

## Revendications

1. Récepteur hydraulique (1) pour commande d'embrayage doté d'un dispositif de débrayeur (102), notamment de véhicule automobile, comportant une partie fixe (4,5) comprenant un tube-guide interne (5) doté d'un axe symétrique axial (X-X') et comprenant un corps externe concentrique (4), globalement de forme annulaire et qui comporte centralement une portion avant d'extrémité tubulaire externe (8) entourant le tube-guide (5), définissant entre eux une cavité annulaire borgne (7) propre à être alimentée en fluide et à l'intérieur de laquelle est monté mobile axialement un piston (6) qui porte, à son extrémité axiale avant, un élément d'attaque (9) propre à agir sur le dispositif débrayeur (102) de l'embrayage, du type dans lequel le tube-guide interne (5) fait saillie axialement vers l'avant par rapport à la portion tubulaire externe (8) et sert de guide au piston (6) qui entoure le tube-guide (5) en étant entouré par la portion tubulaire (8), et du type dans lequel le piston (6) porte à son extrémité avant une pièce métallique porteuse et d'appui (122) qui comporte au moins un deuxième tronçon (128) annulaire d'orientation axiale dirigé vers l'arrière en direction de la portion tubulaire externe (8) et prolongé, à son extrémité avant, radialement vers l'extérieur par un tronçon annulaire transversal (129) d'appui pour un composant (91) de l'élément d'attaque (9), **caractérisé en ce qu'**il est prévu des moyens d'ancrage, par coopération de formes, de la pièce porteuse et d'appui (122) sur l'extrémité avant du piston (6).

2. Récepteur selon la revendication 1, **caractérisé en ce que** la pièce porteuse et d'appui comporte un premier tronçon annulaire (125) d'orientation axiale qui est décalé radialement vers l'intérieur et dont l'extrémité axiale arrière se raccorde à l'extrémité axiale arrière du deuxième tronçon (128) par un tronçon arrondi sensiblement en demi-cercle (127), et **en ce que** lesdits moyens d'ancrage sont formés au moins en partie dans ledit premier tronçon (125).

3. Récepteur selon l'une quelconque des revendications précédentes, **caractérisé en ce que** la pièce porteuse et d'appui (122) comporte au moins un trou (124) à travers lequel s'étend une portion du matériau du piston (6).

4. Récepteur hydraulique selon la revendication précédente prise en combinaison avec la revendication 2, **caractérisé en ce que** des trous sont (124) formés dans ledit premier tronçon annulaire d'orientation axiale (125).

5. Récepteur hydraulique selon l'une des revendications 3 ou 4 prise en combinaison avec la revendication 2, **caractérisé en ce que** des trous sont formés dans ledit tronçon arrondi de raccordement (127).

6. Récepteur selon l'une quelconque des revendications3 à 5, **caractérisé en ce que** la pièce porteuse et d'appui (122) présente des trous (124) pour son ancrage ferme dans le piston (6) par la technique du surmoulage.

7. Récepteur hydraulique selon l'une quelconque des revendications 2 à 5, **caractérisé en ce que** la pièce porteuse et d'appui (122) est ancrée par encliquetage dans le piston (6).

8. Récepteur hydraulique selon la revendication précédente, **caractérisé en ce que** le piston (6) présente un changement de diamètre (302) à la périphérie externe de son extrémité avant (304) avec formation d'un épaulement transversal (61) entre les changements de diamètre, **en ce que** le tronçon arrondi (227) prend appui sur l'épaulement (61) et le premier tronçon (125) comporte des pattes inclinées (224) engagées chacune radialement vers l'intérieur dans une gorge (62) formée dans la périphérie de la portion de diamètre réduit de l'extrémité avant du piston (6).

9. Récepteur hydraulique selon la revendication 7, **caractérisé en ce que** le piston (6) présente un changement de diamètre (302) à la périphérie externe de son extrémité avant (304) avec formation d'un épaulement transversal (61) entre les changements de diamètre, **en ce que** le tronçon arrondi (327) prend appui sur l'épaulement (61) et le premier tronçon (125) comporte des trous (324) dont chacun reçoit un ergot (300) d'ancrage qui s'étend radialement vers l'extérieur depuis la périphérie de la portion de diamètre réduit de l'extrémité avant du piston (6).

10. Récepteur hydraulique selon l'une quelconque des revendications 2 à 9. **caractérisé en ce que** l'extrémité axiale avant du premier tronçon annulaire (125) forme une gorge (126) de réception d'une rondelle élastique autocentreuse (10) à action axiale qui s'engage à sa périphérie interne dans la gorge (126) du premier tronçon (125) et qui s'appuie à sa périphérie externe sur ledit un composant (91) de l'élément d'attaque (9) pour le solliciter en direction du tronçon annulaire transversal d'appui (129).

11. Récepteur hydraulique selon l'une quelconque des revendications 2 à 10, **caractérisé en ce que** le premier tronçon annulaire (125) s'étend axialement vers l'avant au delà de l'extrémité axiale avant du piston (6) d'une longueur telle que cela permet de loger un joint racleur d'étanchéité (150), à l'avant du piston (6), qui comporte une lèvre en contact avec la périphérie externe du tube-guide interne (5)

12. Récepteur hydraulique selon la revendication précédente, **caractérisé en ce que** le joint racleur (150) s'appuie sur la face avant du piston (6) et est centré par la périphérie interne du premier tronçon (125).

13. Récepteur hydraulique selon la revendication précédente prise en combinaison avec la revendication 10, **caractérisé en ce que** la gorge (126) qui reçoit la rondelle (10) est réalisée par refoulement de matière conduisant à la formation d'un bourrelet interne (151) permettant d'immobiliser axialement le joint racleur (150) entre le bourrelet (151) et la face avant du piston (6).

14. Récepteur hydraulique selon l'une quelconque des revendications 2 à 13, **caractérisé en ce que** la pièce porteuse et d'appui (122) comporte un troisième tronçon annulaire axial (134) qui est décalé radialement vers l'extérieur par rapport au deuxième tronçon (128) afin que la portion avant d'extrémité tubulaire externe (8) puisse pénétrer radialement entre les deuxième et troisième tronçons (128,134).

15. Récepteur hydraulique selon la revendication précédente, **caractérisé en ce que** les deuxième et troisième tronçons annulaires (128, 134) sont reliés entre eux par ledit tronçon annulaire transversal (129) d'appui.

16. Récepteur hydraulique selon l'une des revendications 14 ou 15, **caractérisé en ce que** le troisième tronçon annulaire d'orientation axiale (134) se terminant par un épaulement transversal (135) prolongé par un tronçon incliné (136) d'extrémité pour le centrage et l'appui de l'extrémité axiale avant d'un ressort (11) de précharge.

17. Récepteur hydraulique selon la revendication précédente, **caractérisé en ce que** la face avant de l'épaulement transversal (135) et du tronçon incliné (136) sert d'appui à l'extrémité avant d'un soufflet d'étanchéité (21).

18. Récepteur hydraulique selon l'une quelconque des revendications précédentes, **caractérisé en ce que** l'élément d'attaque (9) est un roulement à billes.

19. Récepteur hydraulique selon la revendication précédente, **caractérisé en ce que** le roulement à billes (9) comporte une bague interne qui présente à sa périphérie interne un rebord (91) d'orientation transversale dirigé vers l'axe de symétrie axiale (X-X') du tube-guide interne (5) et qui constitue ledit composant de l'élément d'attaque.

20. Récepteur hydraulique selon l'une des revendications 18 ou 19 prise en combinaison avec la revendication 17, **caractérisé en ce que** le soufflet (21) se termine à l'avant par un bourrelet d'accrochage (160) centré intérieurement par la périphérie externe du troisième tronçon (134) et qui prend appui sur une face de l'épaulement (135), et **en ce que** le bourrelet (160) pénètre sous la bague interne du roulement, d'orientation axiale à cet endroit.

## Patentansprüche

1. Hydraulischer Nehmerzylinder (1) zur Kupplungsbetätigung mit einer Ausrückvorrichtung (102), insbesondere für Kraftfahrzeuge, umfassend einen ortsfesten Teil (4, 5), der ein inneres Führungsrohr (5) mit einer axialen Symmetrieachse (X-X') und einen insgesamt ringförmigen konzentrischen Außenkörper (4) aufweist, der mittig einen äußeren rohrförmigen vorderen Endabschnitt (8) umfaßt, der das Führungsrohr (5) umgibt, die einen zwischen ihnen befindlichen ringförmigen Blindhohlraum (7) definieren, der mit Fluid befüllt werden kann und in dessen Innern axial beweglich ein Kolben (6) gelagert ist, der an seinem vorderen axialen Ende ein Angriffselement (9) trägt, das auf die Ausrückvorrichtung (102) der Kupplung einwirken kann, wobei das innere Führungsrohr (5) im Verhältnis zum rohrförmigen äußeren Abschnitt (8) axial nach vorn vorsteht und als Führung für den Kolben (6) dient, der das Führungsrohr (5) umgibt und vom rohrförmigen Abschnitt (8) umgeben ist, und wobei der Kolben (6) an seinem vorderen Ende ein metallisches Trag- und Auflageteil (122) trägt, das wenigstens ein axial ausgerichtetes ringförmiges zweites Teilstück (128) umfaßt, das nach hinten in Richtung des äußeren rohrförmigen Abschnitts (8) verläuft und an seinem vorderen Ende radial nach außen durch ein ringförmiges Auflagequerstück (129) für ein Bestandteil (91) des Angriffselements (9) verlängert wird,
**dadurch gekennzeichnet,**
**daß** Verankerungsmittel für die durch formschlüssiges Zusammenwirken erfolgende Verankerung des Trag- und Auflageteils (122) am vorderen Ende des Kolbens (6) vorgesehen sind.

2. Nehmerzylinder nach Anspruch 1, **dadurch gekennzeichnet, daß** das Trag- und Auflageteil ein axial ausgerichtetes erstes ringförmiges Teilstück (125) umfaßt, das radial nach innen versetzt ist und dessen hinteres axiales Ende sich an das hintere axiale Ende des zweiten Teilstücks (128) über ein in etwa halbkreisförmig abgerundetes Teilstück (127) anschließt, und daß die besagten Verankerungsmittel wenigstens teilweise in dem besagten ersten Teilstück (125) ausgebildet sind.

3. Nehmerzylinder nach einem der vorangehenden Ansprüche, **dadurch gekennzeichnet, daß** das Trag- und Auflageteil (122) wenigstens ein Loch (124) umfaßt, durch das sich ein Abschnitt des Werkstoffs des Kolbens erstreckt (6).

4. Nehmerzylinder nach dem vorangehenden Anspruch in Kombination mit Anspruch 2, **dadurch gekennzeichnet, daß** Löcher (124) in dem besagten axial ausgerichteten ersten ringförmigen Teilstück (125) ausgebildet sind.

5. Nehmerzylinder nach einem der Ansprüche 3 oder 4 in Kombination mit Anspruch 2, **dadurch gekennzeichnet, daß** Löcher in dem besagten abgerundeten Anschlußteilstück (127) ausgebildet sind.

6. Nehmerzylinder nach einem der Ansprüche 3 bis 5, **dadurch gekennzeichnet, daß** das Trag- und Auflageteil (122) Löcher (124) für seine feste Verankerung im Kolben (6) durch die Technik des Aufformens aufweist.

7. Nehmerzylinder nach einem der Ansprüche 2 bis 5,
**dadurch gekennzeichnet, daß** das Trag- und Auflageteil (122) durch Verrasten im Kolben (6) verankert ist.

8. Nehmerzylinder nach dem vorangehenden Anspruch, **dadurch gekennzeichnet, daß** der Kolben (6) eine Durchmesseränderung (302) am äußeren Umfang seines vorderen Endes (304) mit Bildung einer Querschulter (61) zwischen den Durchmesseränderungen aufweist, daß das abgerundete Teilstück (227) auf der Schulter (61) zur Auflage kommt und das erste Teilstück (125) geneigte Ansätze (224) umfaßt, die jeweils radial nach innen in eine Auskehlung (62.) eingreifen, die im Umfang des Abschnitts mit verringertem Durchmesser des vorderen Endes des Kolbens (6) ausgebildet ist.

9. Nehmerzylinder nach Anspruch 7, **dadurch gekennzeichnet, daß** der Kolben (6) eine Durchmesseränderung (302) am äußeren Umfang seines vorderen Endes (304) mit Bildung einer Querschulter (61) zwischen den Durchmesseränderungen aufweist, daß das abgerundete Teilstück (327) auf der Schulter (61) zur Auflage kommt und das erste Teilstück (125) Löcher (324) umfaßt, die jeweils eine Verankerungsnase (300) aufnehmen, die sich radial nach außen vom Umfang des Abschnitts mit verringertem Durchmesser des vorderen Endes des Kolbens (6) aus erstreckt.

10. Nehmerzylinder nach einem der Ansprüche 2 bis 9, **dadurch gekennzeichnet, daß** das vordere axiale Ende des ringförmigen ersten Teilstücks (125) eine Auskehlung (126) zur Aufnahme einer axial wirksamen selbstzentrierenden Federscheibe (10) bildet, die an ihrem inneren Umfang in die Auskehlung (126) des ersten Teilstücks (125) eingreift und die an ihrem äußeren Umfang auf dem besagten einen Bestandteil (91) des Angriffselements (9) anliegt, um es in Richtung des ringförmigen Querauflagestücks (129) zu beaufschlagen.

11. Nehmerzylinder nach einem der Ansprüche 2 bis 10, **dadurch gekennzeichnet, daß** sich das erste ringförmige Teilstück (125) axial nach vorn über das vordere axiale Ende des Kolbens (6) um eine Länge hinaus erstreckt, die so bemessen ist, daß eine Abstreifdichtung (150) an der Vorderseite des Kolbens (6) aufgenommen werden kann, die eine Lippe in Kontakt mit dem äußeren Umfang des inneren Führungsrohrs (5) umfaßt.

12. Nehmerzylinder nach dem vorangehenden Anspruch, **dadurch gekennzeichnet, daß** die Abstreifdichtung (150) an der Vorderseite des Kolbens (6) anliegt und durch den inneren Umfang des ersten Teilstücks (125) zentriert wird.

13. Nehmerzylinder nach dem vorangehenden Anspruch in Kombination mit Anspruch 10, **dadurch gekennzeichnet, daß** die Auskehlung (126), die die Federscheibe (10) aufnimmt, durch Materialstauchung ausgeführt ist, die zur Bildung eines inneren Wulstes (151) führt, der die axiale Sicherung der Abstreifdichtung (150) zwischen dem Wulst (151) und der Vorderseite des Kolbens (6) ermöglicht.

14. Nehmerzylinder nach einem der Ansprüche 2 bis 13, **dadurch gekennzeichnet, daß** das Trag- und Auflageteil (122) ein drittes ringförmiges axiales Teilstück (134) umfaßt, das im Verhältnis zum zweiten Teilstück (128) radial nach außen versetzt ist, damit der äußere rohrförmige vordere Endabschnitt (8) radial zwischen den zweiten und dritten Teilstücken (128, 134) eindringen kann.

15. Nehmerzylinder nach dem vorangehenden Anspruch, **dadurch gekennzeichnet, daß** die zweiten und dritten ringförmigen Teilstücke (128, 134) durch das besagte ringförmige Querauflagestück (129) miteinander verbunden sind.

16. Nehmerzylinder nach einem der Ansprüche 14 oder 15, **dadurch gekennzeichnet, daß** das axial ausgerichtete dritte ringförmige Teilstück (134) in einer Querschulter (135) endet, die durch ein geneigtes Endstück (136) für die Zentrierung und die Auflage des vorderen axialen Endes einer Vorspannfeder (11) verlängert wird.

17. Nehmerzylinder nach dem vorangehenden Anspruch, **dadurch gekennzeichnet, daß** die Vorderseite der Querschulter (135) und des geneigten Teilstücks (136) als Auflage für das vordere Ende eines Dichtungsbalgs (21) dient.

18. Nehmerzylinder nach einem der vorangehenden Ansprüche, **dadurch gekennzeichnet, daß** das Angriffselement (9) ein Kugellager ist.

19. Nehmerzylinder nach dem vorangehenden Anspruch, **dadurch gekennzeichnet, daß** das Kugellager (9) einen Innenring umfaßt, der an seinem inneren Umfang eine quer ausgerichtete Randleiste (91) aufweist, die zur axialen Symmetrieachse (X-X') des inneren Führungsrohrs (5) verläuft und die das besagte Bestandteil des Angriffselements bildet.

20. Nehmerzylinder nach einem der Ansprüche 18 oder 19 in Kombination mit Anspruch 17, **dadurch gekennzeichnet, daß** der Dichtungsbalg (21) vorn in einem Einsetzwulst (160) endet, der innen durch den äußeren Umfang des dritten Teilstücks (134) zentriert wird und der auf einer Fläche der Schulter (135) zur Auflage kommt, und daß der Wulst (160) unter den an dieser Stelle axial ausgerichteten Innenring des Kugellagers dringt.

## Claims

1. An hydraulic actuator (1) for controlling a clutch having a declutching device (102), especially for a motor vehicle, comprising a fixed part (4, 5) that includes an internal guide tube (5) having a symmetrical axial axis (X-X') and including a concentric outer body (4) of generally annular form, which has a central external tubular front end portion (8) surrounding the guide tube (5) and which, together with the latter, defines a blind annular cavity (7) which is arranged to be supplied with fluid and within which there is mounted, for axial movement therein, a piston (6) which carries, at its front axial end, an actuating element adapted to act on the declutching device (102) of the clutch, of the type in which the internal guide tube (5) projects axially forward with respect to the external tubular portion (8) and serves as a guide for the piston (6) that surrounds the guide tube (5), being surrounded by the tubular portion (8), and of the type in which the piston (5) carries at its front end a metallic carrier and abutment member (122) which includes at least one axially oriented annular second portion (128), directed rearwardly towards the external tubular portion (8) and extended radially outwardly at its front end by a transverse annular abutment portion (129) for engagement by one component (91) of the actuating element (9), **characterised in that** anchor means are defined by mating cooperation of the carrier and abutment member (122) on the front end of the piston (6).

2. An actuator according to Claim 1, **characterised in that** the carrier and abutment member has an axially oriented annular first portion (125) which is offset radially inwards, and of which the rear axial end is joined to the rear axial end of the second portion (128) through a substantially semicircular rounded portion (127), and **in that** the said anchor means are formed at least partly in the said portion (125).

3. An actuator according to either one of the preceding Claims, **characterised in that** the carrier and abutment member (122) has at least one hole (124) through which a portion of the material of the piston (6) extends.

4. An hydraulic actuator according to the preceding Claim taken in combination with Claim 2, **characterised in that** holes (124) are formed in the said axially oriented annular first portion (125).

5. An hydraulic actuator according to Claim 3 or Claim 4 taken in combination with Claim 2, **characterised in that** holes are formed in the said rounded junction portion (127).

6. An actuator according to any one of Claims 3 to 5, **characterised in that** the carrier and abutment member (122) has holes (124) for anchoring it securely in the piston (6) by the technique of superimposed moulding.

7. An hydraulic actuator according to any one of Claims 2 to 5, **characterised in that** the carrier and abutment member (122) is anchored by snap-fitting it in the piston (6).

8. An hydraulic actuator according to the preceding Claim, **characterised in that** the piston (6) has a change of diameter (302) at the outer periphery of its front end (304), to define a transverse shoulder (61) between the different diameters, and **in that** the rounded portion (227) bears on the shoulder (61), and the first portion (125) has inclined lugs (224), each of which is engaged radially inwardly in a groove (62) formed in the periphery of the portion of the front end of the piston (6) having reduced diameter.

9. An hydraulic actuator according to Claim 7, **characterised in that** the piston (6) has a change of diameter (302) at the outer periphery of its front end (304), to define a transverse shoulder (61) between the different diameters, and **in that** the rounded portion (327) bears on the shoulder (61) and the first portion (125) has holes (324), each of which receives an anchoring finger (300) which extends radially outwards from the periphery of the portion of the front end of the piston (6) having reduced diameter.

10. An hydraulic actuator according to any one of Claims 2 to 9, **characterised in that** the front axial end of the annular first portion (125) defines a groove (126) for receiving an axially acting, self-centring, resilient ring (10) which engages at its inner periphery in the groove (126) of the first portion (125), and which abuts at its outer periphery on the said one component (91) of the actuating element (9) so as to bias it towards the transverse annular abutment portion (129).

11. An hydraulic actuator according to any one of Claims 2 to 10, **characterised in that** the annular first portion (125) extends axially forwards from the axial front end of the piston (6), by an amount such as to enable a wiping seal ring (150) to be accommodated in front of the piston (6), the seal ring including a lip in contact with the outer periphery of the internal guide tube (5).

12. An hydraulic actuator according to the preceding Claim, **characterised in that** the wiping seal ring (15)) engages on the front face of the piston (6) and is centred by the inner periphery of the first portion (125).

13. An hydraulic actuator according to the preceding Claim taken in combination with Claim 10, **characterised in that** the groove (126) that receives the ring (10) is formed by upsetting material so as to form an internal bead (151), whereby to immobilise the wiping seal ring (150) axially between the bead (131) and the front face of the piston (6).

14. An hydraulic actuator according to any one of Claims 2 to 13, **characterised in that** the carrier and abutment member (122) includes an axial, annular third portion (134) which is offset radially outwards with respect to the second portion (128), whereby the external tubular front end portion (8) can penetrate radially between the second and third portions (128, 134).

15. An hydraulic actuator according to the preceding Claim, **characterised in that** the second and third annular portions (128, 134) are joined together by the said transverse annular abutment portion (129).

16. An hydraulic actuator according to Claim 14 or Claim 15, **characterised in that** the asialy oriented annular third portion (134) which is terminated by a transverse shoulder (135), is extended in length by an inclined end portion (136) for centring and abutting engagement of the front axial end of a preloading spring (11).

17. An hydraulic actuator according to the preceding Claim, **characterised in that** the leading face of the transverse shoulder (135) and inclined portion (136) serves for abutment of the front end of a sealing bellows (21).

18. An hydraulic actuator according to any one of the preceding Claims, **characterised in that** the actuating element (9) is a ball bearing.

19. An hydraulic actuator according to the preceding Claim, **characterised in that** the ball bearing (9) has an inner ring which includes, in its inner periphery, a transversely oriented flange (91) projecting towards the axial axis of symmetry (X-X') of the internal guide tube (5) and constituting the said component of the actuating element.

20. An hydraulic actuator according to Claim 18 or Claim 19 taken in combination with Claim 17, **characterised in that** the bellows (21) terminates at the front in an anchor bead (160) which is centred internally by the outer periphery of the third portion (134), and which bears on a face of the shoulder (135), and **in that** the bead (160) penetrates under the inner ring of the bearing, which is oriented axially at that point.
